Europäisches Patentamt

European Patent Office

Office européen des brevets

Publication number: **0 293 546**

**A2**

## EUROPEAN PATENT APPLICATION

Application number: 88101545.7

Date of filing: 03.02.88

Int. Cl.4 **B01J 8/04 , C01C 1/04**

Priority: **11.02.87 CH 494/87**

Date of publication of application:
**07.12.88 Bulletin 88/49**

Designated Contracting States:
**AT DE ES FR GB GR IT NL**

Applicant: **AMMONIA CASALE S.A.**
**Via della Posta 4**
**CH-6900 Lugano(CH)**

Applicant: **Zardi, Umberto**
**Via Lucino 57**
**CH-6932 Breganzona (Ti)(CH)**

Inventor: **Zardi, Umberto**
**Via Lucino 57**
**CH-6900 Breganzona(CH)**
Inventor: **Pagani, Giorgio**
**Salita dei Frati 13**
**CH-6900 Lugano(CH)**

Representative: **Incollingo, Italo**
**AMMONIA CASALE S.A. Via della Posta 4**
**CH-6900 Lugano(CH)**

### System to deal with the efficiency of reactors for exothermic ammonia synthesis.

In the system in which synthesis gas first runs through a minor portion of the catalytic bed with axial flow, and then through a second major portion of catalytic bed with radial flow, the quench gas is made to flow into the highest annular part of said major portion, immediately under the axial flow portion. The feed pipes for the quench gas end with annular distributors equipped with lower exit perforations having such distribution and openings that there is a constant pressure drop all along the annular perimeter.

FIG.2

## System to improve the efficiency of reactors for exothermic synthesis and more particularly for the reaction of ammonia with quenching of the synthesis gas in annular zones

This invention concerns a system to improve the efficiency of reactors for exothermic heterogeneous synthesis, and more particularly for the reaction of ammonia and methanol, having an outer shell and a cartridge containing several catalytic beds separated one from the other, in which system the synthesis gas flows axially through a minor portion of each bed and radially, from the outside towards the inside and vice-versa, through the major portion of each bed, said synthesis gas, hot by reason of reaction, being collected in an annular zone corresponding to the area of bed run through radially, and being quenched with additional quench gas.

The Applicants have described in the published European Patent No. 0202454 systems to improve the efficiency of reactors for the synthesis of ammonia, and more particularly to improve the efficiency of multi-bed reactors with intermediate quenching of the beds.

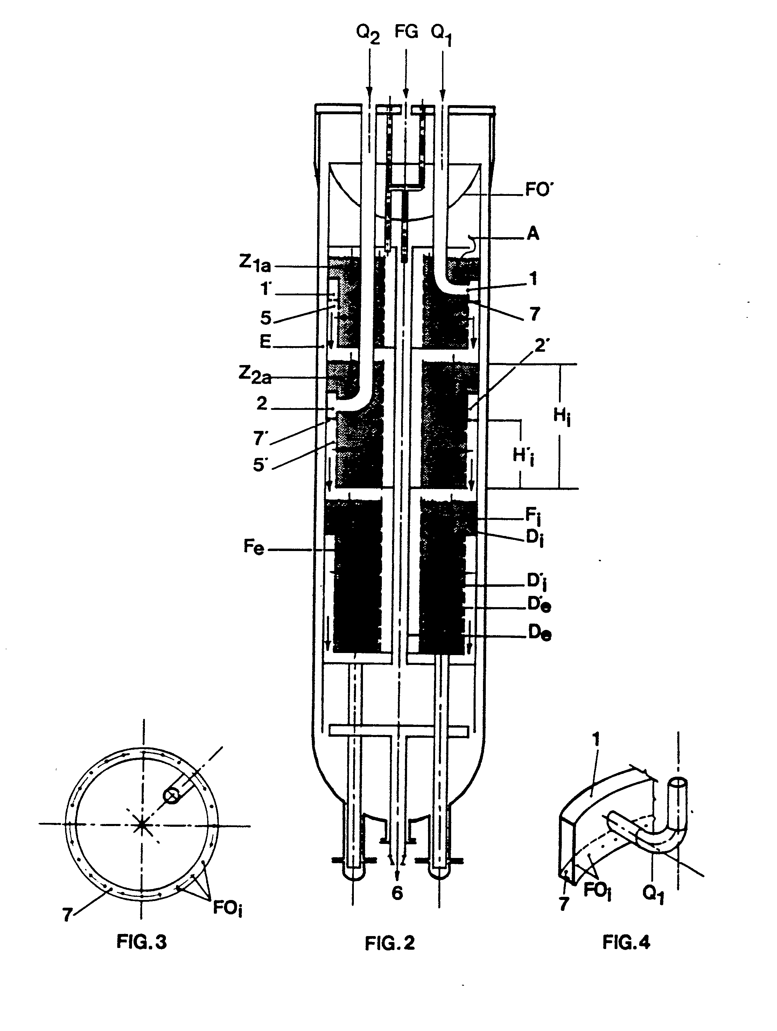

In the above-mentioned published Patent, the Applicants have described systems according to which the quench gas was introduced either by means of a toroidal ring (fig. 3A and 5) situated centrally in the free space between beds, or by feeding the quench gas (fig. 2B) directly into the internal anulus, formed by the internal cylindrical wall for the distribution of gas, in the case of beds run through by gas from the outside towards the inside, or in the anulus formed by the outer wall of the cartridge and the outer wall for gas distribution, in the case of beds run through by gas from the inside towards the outside (fig. 3B).

The extreme importance of obtaining the efficient mixing of cold quench gas with the hot gas from the reaction beds is well known. It is in fact indispensable, to achieve optimal efficiency, for the gas to be uniformly quenched before it enters the next reaction bed.

The Applicants have therefore been remarkably assiduous in studying this problem. A particular solution is offered in the European Patent Publication No. 0248284, again by the Applicants, concerning reactors for the synthesis of ammonia modified to improve yields, obtaining a combination of beds, part of them with a purely axial flow and part of them with an axial-radial gas flow.

Continuing with their research and having now available the results of experiments concerning the embodiment of the above-mentioned inventions, the Applicants have surprisingly established the superior efficiency of quench cooling systems, where this is carried out by feeding the cold gas directly into the internal or external anulus of the beds through which the gas runs radially (internal anulus where the gas flows inwardly or external anulus where the gas flows outwardly).

The experimental results have surprisingly shown that the yield in reactors for the synthesis of ammonia having several catalytic beds (for example 4 beds) with three quench stages of the gas living the beds (first stage between the first and the second bed, second stage between the second and the third bed and third stage between the third and fourth bed), is much higher where the mixing of cold gas with reacted gas takes place in the above-mentioned anuli (according for example to figures 2B or 3B and 5 in the published European Patent No. 0202454), as compared to when the fresh gas is mixed with the reaction gas in the central free space between beds, as shown for example in figures 2A and 3A, still in the said published European Patent.

For example, in the first case (quench gas fed from the anulus) the total yield by flowing through the reactor with four catalytic beds, modified according to the technology described in the above-mentioned Patent Application, but by sending the quench gas into the internal anulus has proved to be 20% higher than in the same case when, with the same type of reactor, quenching was carried out by mixing the fresh gas with the reacted gas in the free central zone between beds.

It has been found that surprisingly high yields can be obtained by adopting measures which have proved to be critical:

1) the feed pipe for the quench gas (on a parallel axis with that of the reactor) must have its outlet in the highest part of the anulus;

2) the end of the feed pipe consists in an annular distributor (with parallelepipedon or circular cross-section) which surrounds the whole of the bed perimeter;

3) the annular distributor has outlets (preferably perforations on the lower wall of the anulus) distributed along the perimeter and with openings such as to permit a constant pressure drop all along the anulus.

The various aspects and advantages of the invention will be better illustrated by the following description of the embodiments shown in which:

- figures 1 and 2 are two longitudinal cross-sections,

- figure 3 is a cross-section seen from below of the annular distributor, with perforated lower wall, and

- figure 4 is a perspective view in cross-section of an enlarged portion of the annular distributor in figure 3.

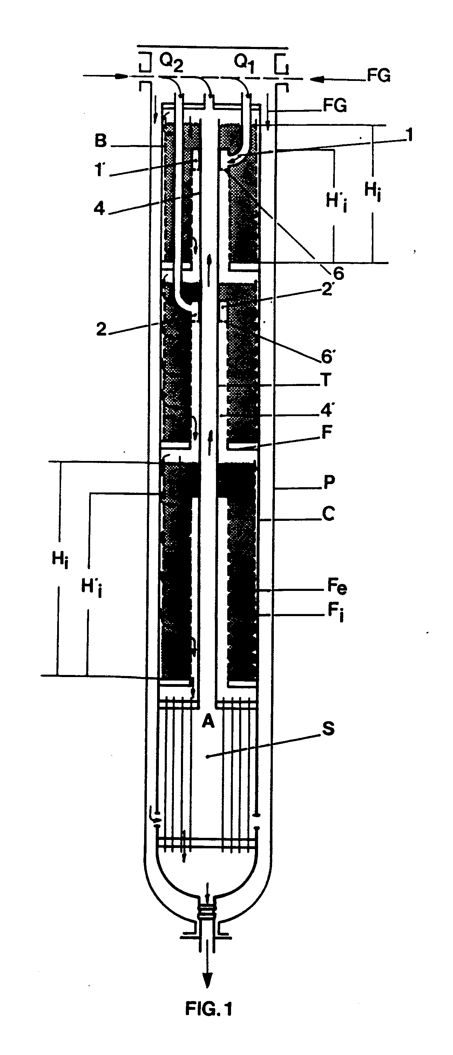

Figures 1 and 2 correspond to figures 3B and 5 in the published European Patent 0202454 whose description is considered embodied herein.

As can be seen, in addition to what has already been illustrated, the lower ends of the quench gas feed pipes Q1, Q2 flow now into annular distributors 1-1', 2-2' situated in the highest part of their respective internal anuli 4 and 4' in figure 1 and external 5 and 5' in figure 2. Each distributor is placed immediately under the axial flow zone Z1a, Z2a, etcetera.

The annular distributors are found along the whole of the perimeter of anuli 4, 4' and their lower wall 6-6' and 7-7' are provided with numerous perforations FOi so distributed and with such openings as to permit the same pressure drop along the entire perimeter of the anulus, i.e. all along the circular development of the distributor (figure 3).

In figure 4 distributor 1 has a rectangular cross-section but it is obvious that it can be circular, elliptical, etc. etc.

Perforations FOi can also be circular or otherwise but generally the openings can vary along the perimeter in order to obtain a pressure drop which is practically constant (no gradients).

The specifications of the above-mentioned published European Applications No. 0202454 and No. 0248284 are considered as forming integral parts of, i.e. incorporated in, the description of the present Application.

Indeed the numeral references on the drawings of the present invention are those on the drawings of said prior Applications of the Applicants.

## Claims

1. System to improve the efficiency of reactors for exothermic heterogeneous synthesis, and more particularly for the reaction of ammonia and methanol, having an outer shell and a cartridge containing several catalytic beds separated one from the other, in which system the synthesis gas flows axially through a minor portion of each bed, and radially, from the outside towards the inside and vice-versa, through the major portion of each bed, said synthesis gas, hot by reason of reaction, by being collected in an annular zone corresponding to the area of bed run through radially, and being quenched with additional quench gas, characterized by the fact that said cold quench gas is made to flow from the outside directly into the highest initial part of the annular zone of the bed run through with an axial flow, immediately under the terminal part of the bed zone run through axially by the synthesis gas.

2. System according to Claim 1, characterized by the fact that the quench gas is directed into said upper part of the radial flow annular zone with a feed pipe whose axis is parallel to that of the reactor, such pipe ending with an annular distributor going all along the bed perimeter.

3. System according to the preceding claims, characterized by the fact that the annular distributor is equipped with outlets, and more particularly with perforations in its lower wall distributed all along its perimeter and with such openings that there is a constant pressure drop all along the annular perimeter.

FIG. 1

FIG. 3

FIG. 2

FIG. 4